Europäisches Patentamt

European Patent Office

Office européen des brevets

(11) Numéro de publication : **0 172 081**
**B1**

# (12) FASCICULE DE BREVET EUROPÉEN

(45) Date de publication du fascicule du brevet :
09.09.87

(51) Int. Cl.⁴ : **B 65 D 43/08**, B 65 D 21/02,
A 47 G 19/26, A 47 J 47/10

(21) Numéro de dépôt : **85401467.7**

(22) Date de dépôt : **17.07.85**

(54) **Bac alimentaire.**

(30) Priorité : **20.07.84 FR 8411574**

(43) Date de publication de la demande :
**19.02.86 Bulletin 86/08**

(45) Mention de la délivrance du brevet :
**09.09.87 Bulletin 87/37**

(84) Etats contractants désignés :
**AT BE CH DE FR GB IT LI LU NL SE**

(56) Documents cités :
**FR-A- 2 447 332**
**US-A- 2 957 601**

(73) Titulaire : **CIDELCEM Société Anonyme dite**
**5-15, rue Olivier Noyer**
**F-75014 Paris (FR)**

(72) Inventeur : **Tzifkansky, Guy**
**8 avenue Gabriel Péri**
**F-92260 Fontenay aux Roses (FR)**
Inventeur : **Marchais, Jean-Claude**
**6 avenue Aristide Briand**
**F-94240 L'Hay Les Roses (FR)**

(74) Mandataire : **Vigand, Privat et al**
**SOSPI 14-16, rue de la Baume**
**F-75008 Paris (FR)**

EP 0 172 081 B1

## Description

La présente invention a trait à un bac alimentaire ayant un fond sensiblement rectangulaire et des parois évasées se terminant par une ouverture sensiblement rectangulaire et comportant à sa partie supérieure un rebord horizontal de forme extérieure rectangulaire entourant l'ouverture du bac et une arête verticale prolongeant les parois au dessus du rebord ledit bac étant muni d'un couvercle comportant d'une part un rebord horizontal et d'autre part une arête verticale disposée au dessous du rebord et venant s'emboîter autour de l'arête verticale du bac, l'arête verticale du bac ayant une hauteur voisine de celle du couvercle.

Un tel bac est décrit dans le document FR-A- 2 491 883.

Un tel bac possède une bonne étanchéité contre les projections extérieures de liquide qui peuvent avoir lieu après son remplissage.

De plus le couvercle est facilement soulevable du bac tout en ne comportant pas de poignée qui sont une source de difficultés lors du nettoyage.

On a remarqué que pour assurer une bonne conservation des produits dans le bac il faut, suivant leur nature, soit une très légère aération, soit une aération plus importante.

Ainsi les légumes frais ou cuits demandent une légère aération alors que pour les viandes crues une aération plus importante est nécessaire.

Le bac selon l'invention permettant avec un seul couvercle d'assurer ces deux types d'aération est caractérisé en ce que l'arête verticale du bac est munie d'encoches sur au moins deux côtés du bac et en ce que l'arête verticale du couvercle comporte des tronçons disposés en regard des encoches pour une position du couvercle et non disposés en regard des encoches pour une autre position du couvercle, lesdits tronçons étant décalés vers l'extérieur et leur bord inférieur étant situé à un niveau inférieur au fond - de l'encoche mais supérieur au rebord horizontal du bac.

Ainsi lorsque les tronçons sont en regard des encoches il se produit une circulation d'air qui passe entre le bord inférieur des tronçons et le rebord du bac et dans les encoches. Par contre lorsque les tronçons ne sont pas en regard des encoches il ne se produit qu'une légère circulation d'air due aux fuites entre l'arête verticale du couvercle et le rebord du bac et entre l'arête verticale du bac et le couvercle.

Selon un perfectionnement de l'invention la face inférieure du couvercle est munie d'une nervure verticale parallèle à l'arête verticale, ladite nervure servant à bloquer l'eau de condensation, empêchant une étanchéité éventuelle due à l'eau de condensation pouvant résider entre les nervures du bac et le couvercle quand ce dernier est en position légère aération, ainsi qu'une déshydratation trop rapide des aliments stockés, lorsque le couvercle est en position aération importante. .

Selon un autre perfectionnement de l'invention la face supérieure du couvercle comporte un renflement faisant le tour du couvercle et interrompu en un point, ledit renflement étant disposé selon un rectangle de dimensions supérieures au fond du bac, mais de dimensions comprises entre celles de l'arête et de la nervure situées sur la face inférieure du couvercle permettant aussi de poser couvercle sur couvercle et bac sur couvercle.

Ainsi il est possible d'une part d'emboîter les divers bacs les uns dans les autres et d'autre part d'empiler bac sur couvercle ainsi que couvercle sur couvercle.

La présente invention sera mieux comprise à la lumière de la description qui va suivre dans laquelle :

La figure 1 représente le bac alimentaire selon l'invention avec le couvercle en position aération importante.

Les figures 2 et 3 représentent des vues agrandies de parties de la figure 1.

La figure 4 représente une vue de dessus du bac selon l'invention.

La figure 5 représente une coupe du bac de la figure 4.

La figure 6 représente une vue de dessus du couvercle dont une partie est arrachée.

La figure 7 représente une coupe verticale du couvercle de la figure 6.

La figure 8 représente une vue de dessus du bac alimentaire avec le couvercle en position aération importante.

La figure 9 représente le bac alimentaire selon l'invention avec le couvercle en position légère aération.

Les figures 10 et 11 représentent des vues agrandies de parties de la figure 9.

La figure 12 représente une vue de dessus du bac alimentaire avec le couvercle en position légère aération.

La figure 13 représente une vue de dessus du bac lorsqu'on fait passer le couvercle de la position représentée sur la figure 8 à celle représentée sur la figure 12.

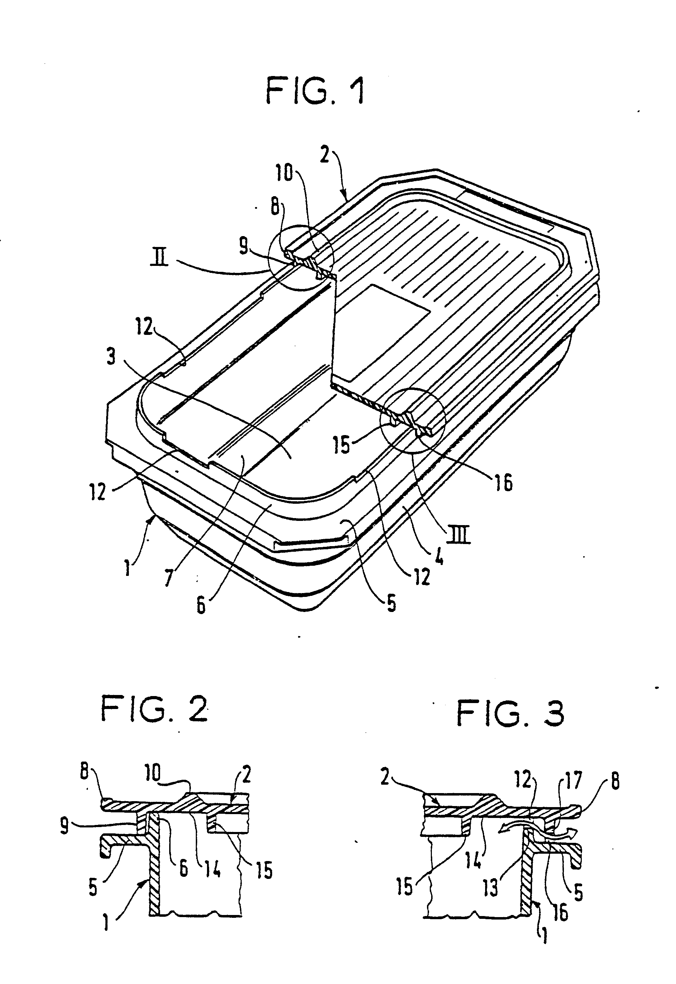

Le bac 1 (voir figure 1) est muni d'un couvercle 2.

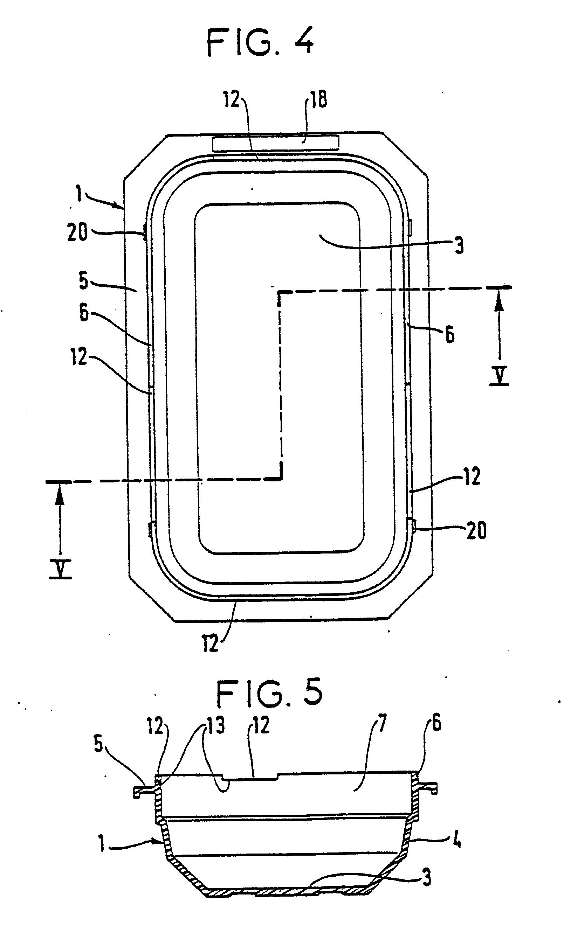

Le bac 1 (voir figures 4 et 5) comporte un fond plat 3 de forme rectangulaire dont les coins sont arrondis ainsi que des parois 4 allant en s'évasant à partir du fond.

La partie supérieure des parois 4 est entourée d'un rebord horizontal 5. Les parois 4 sont prolongées par une arête verticale 6 délimitant une ouverture 7 de forme rectangulaire aux coins arrondis.

L'arête verticale 6 est munie d'une encoche 12, dont le fond 13 est horizontal, sur chacun des côtés de l'ouverture 7. Les encoches 12 des petits côtés étant d'un même côté par rapport à l'axe longitudinal du bac et les encoches 12 des grands côtés étant d'un même côté par rapport à l'axe transversal.

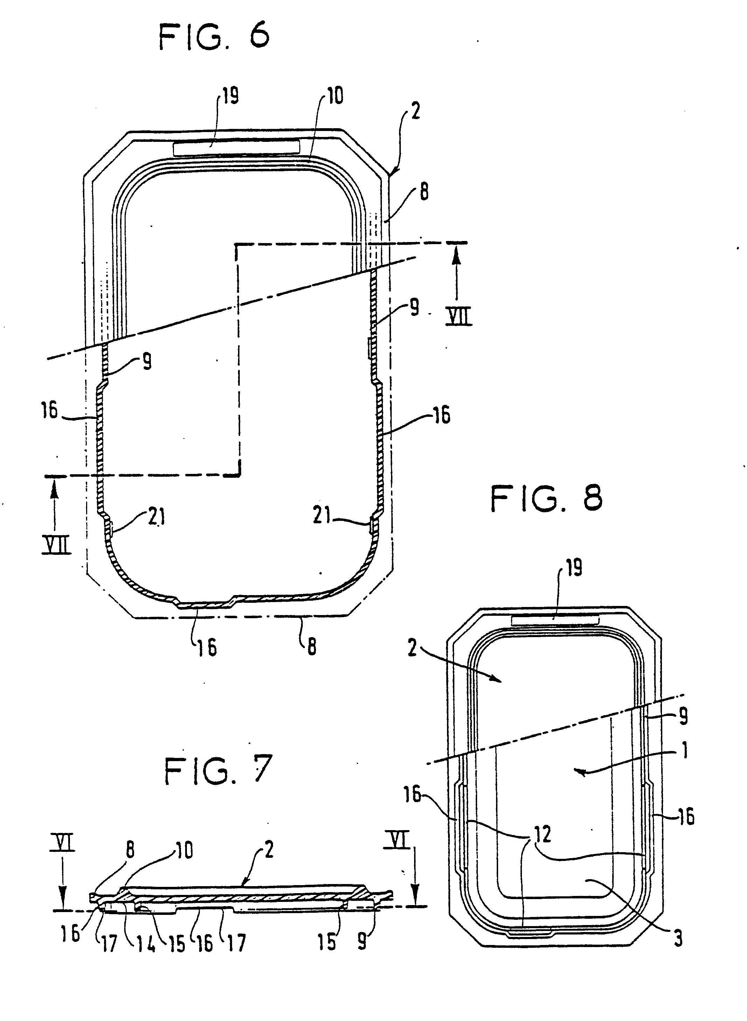

Le couvercle 2 (figures 6 et 7) comporte un rebord 8 qui est juste à l'aplomb du rebord 5 lorsque le couvercle 2 est posé sur le bac 1.

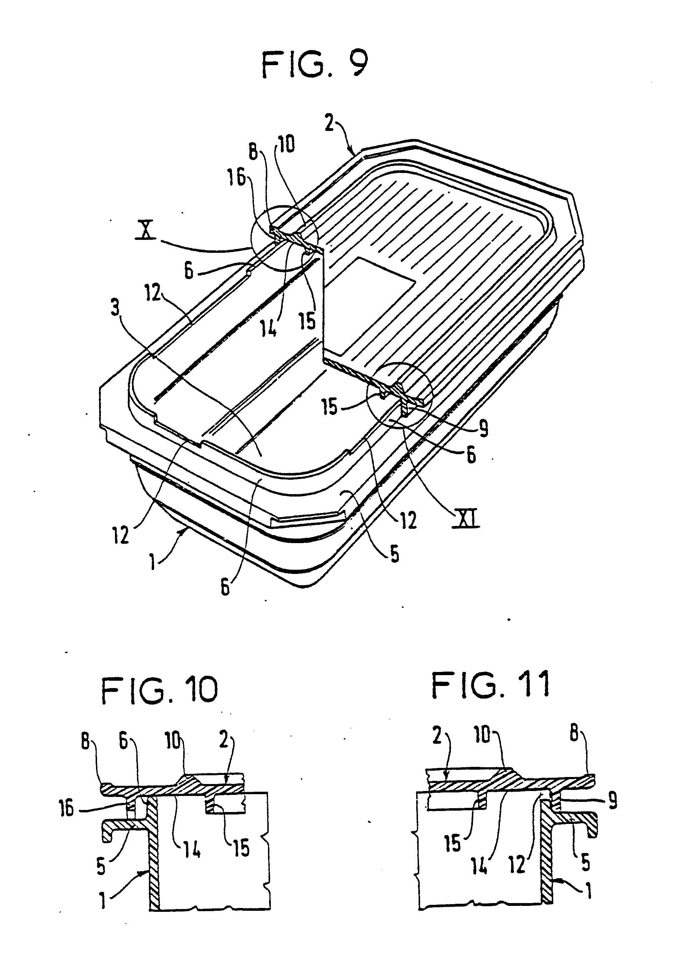

La face inférieure 14 du couvercle 2 est sensiblement plane et est munie d'une arête verticale 9 de hauteur sensiblement égale à la hauteur de l'arête 6 et qui s'emboîte autour de l'arête 6 lorsque le couvercle est posé sur le bac (voir figures 1 et 9).

La face inférieure 14 comporte également une nervure 15 parallèle à l'arête 9 et écartée par rapport à elle vers l'intérieur, qui sert à bloquer l'eau de condensation qui se forme sur la face inférieure et dont la hauteur est inférieure à celle de l'arête 9.

Le couvercle 2 est muni à sa partie supérieure d'un renflement 10 qui fait le tour du couvercle et qui est disposé selon un rectangle de dimensions supérieures aux dimensions du fond 3 du bac 1 et de la nervure 15, mais de dimensions inférieures à l'arête 9 située sur la face inférieure du couvercle 2.

Le renflement 10 est interrompu dans un angle pour faciliter l'égouttage du couvercle 2.

Ainsi on peut poser le fond du bac sur un couvercle 2 car le fond est maintenu à l'intérieur du renflement. On peut également empiler un couvercle sur un autre couvercle le renflement 10 du couvercle inférieur venant se loger entre l'arête 9 et la nervure 15 du couvercle supérieur.

L'arête 9 est munie de quatre tronçons 16 décalés vers l'extérieur et qui pour une position du couvercle 2 sont en regard des encoches 12 (voir figures 1, 2, 3 et 8).

Le bord inférieur 17 des tronçons 16 est situé à un niveau inférieur aux fond 13 des encoches 12 associées mais supérieur au rebord 5 du bac.

Ainsi dans cette position du couvercle l'air passe entre le bord inférieur 17 d'un tronçon 16 et le rebord 5 et dans l'encoche 12 (voir figure 3).

Par contre en dehors des tronçons 16 l'arête 6 avec la face inférieure 14 du couvercle 2 et/ou l'arête 9 avec le rebord 5 ne laissent passer que de faibles fuites d'air (voir figure 2).

Grâce à la présence des quatre tronçons 16 en regard des quatre encoches 12 une circulation d'air importante à lieu. Etant donné que les bords inférieurs 17 des tronçons 16 sont plus bas que les fonds 13 des encoches 12, l'intérieur du bac est protégé contre les projections de liquide de l'extérieur.

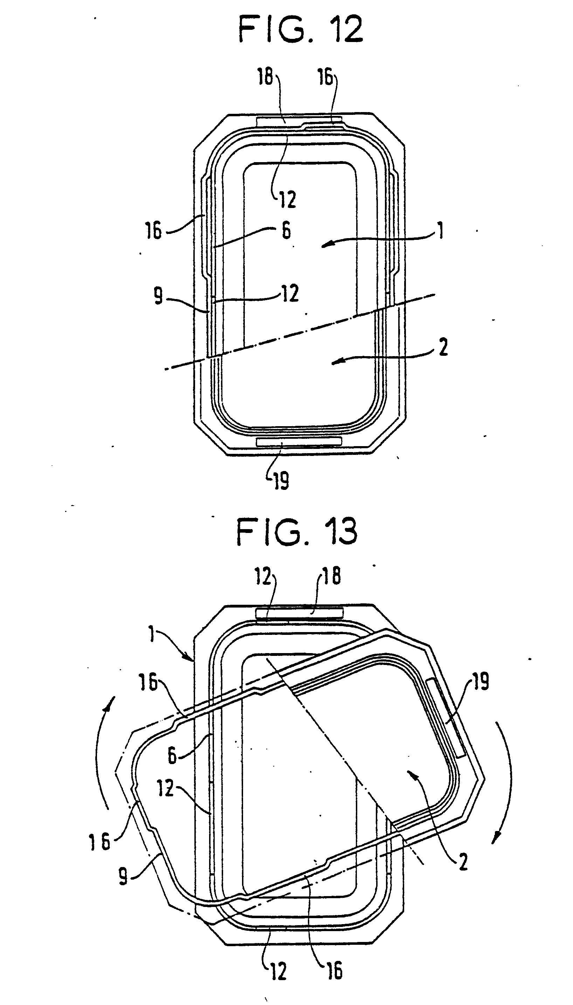

Il suffit de tourner le couvercle 2 (voir figure 13) de 180° pour le mettre dans la seconde position (voir figures 9, 10, 11, 12).

Pour distinguer entre les deux positions on mettra un repère 18 sur le bac 1 et un repère 19 sur le couvercle (voir figures 8, 12 et 13).

Dans la seconde position les repères sont opposés ( figure 12).

Les encoches 12 se trouvent vis-à-vis de l'arête 9 (voir figure 11) et les tronçons 16 se trouvent vis-à-vis de l'arête 6. Il n'y a donc qu'une légère aération dans cette position.

On peut munir l'arête 6 d'excroissances 20 au nombre de quatre qui coopèrent avec des excroissances 21 sur l'arête 9 pour clipser le couvercle 2 sur le bac 1.

Le bac décrit est rectangulaire mais il pourrait évidement être carré. Dans ce cas on pourrait choisir une seconde position (aération légère) qui s'obtiendrait à partir de la première (aération importante) par une rotation de 90°.

**Revendications**

1. Bac alimentaire (1) ayant un fond (3) sensiblement rectangulaire et des parois (4) évasées se terminant par une ouverture (7) sensiblement rectangulaire et comportant à sa partie supérieure un rebord horizontal (5) de forme extérieure rectangulaire entourant l'ouverture (7) du bac (1) et une arête verticale (6) prolongeant les parois (4) au-dessus du rebord (5) ledit bac (1) étant muni d'un couvercle (2) comportant d'une part un rebord horizontal (8) et d'autre part une arête verticale (9) disposée en dessous du rebord (8) et venant s'emboîter autour de l'arête verticale (6) du bac (1), l'arête verticale (6) du bac (1) ayant une hauteur voisine de celle (9) du couvercle (2), caractérisé en ce que l'arête verticale (6) du bac (1) est munie d'encoches (12) sur au moins deux côtés du bac (1) et en ce que l'arête verticale (9) du couvercle (2) comporte des tronçons (16) disposés en regard des encoches (12) pour une position du couvercle (2) et non disposés en regard des encoches (12) pour une autre position du couvercle (2), lesdits tronçons (16) étant décalés vers l'extérieur et leur bord inférieur (17) étant situé à un niveau inférieur au fond (13) de l'encoche (12) correspondant mais supérieur au rebord horizontal (5) du bac (1).

2. Bac alimentaire selon la revendication 1, caractérisé en ce que la face inférieure (14) du couvercle (2) est munie d'une nervure (15) située parallèlement et à l'intérieur de l'arête (9) du couvercle (2).

3. Bac alimentaire selon la revendication 2, caractérisé en ce que la face supérieure du couvercle (2) comporte un renflement (10) faisant le tour du couvercle (2) et interrompu en un point (11), ledit renflement (10) étant disposé selon un rectangle de dimensions supérieures au fond (3) du bac (1), mais de dimensions comprises entre celles de l'arête (9) et de la nervure (15) situées sur la face inférieure (14) du couvercle (2) permettant aussi de poser couvercle sur couvercle et bac sur couvercle.

**Claims**

1. A food container (1) having a substantially rectangular bottom (3) and flared walls (4) terminating in a substantially rectangular opening (7) and including a horizontal rim (5) near the top thereof which is outwardly rectangular in shape and which surrounds the opening (7) to the container (1), and a vertical rib (6) extending the walls (4) above the rim (5), said container (1) being provided with a cover (2) including firstly a horizontal rim (8) and secondly a vertical rib (9) disposed beneath the rim (8) and engaging around the vertical rib (6) of the container (1), with the vertical rib (6) of the container (1) having substantially the same height as the vertical rib (9) of the cover (2), characterized in that the vertical rib (6) of the container (1) is fitted with notches (12) on at least two sides of the container (1) while the vertical rib (9) of the cover (2) includes lengths (16) which are disposed adjacent the notches (12) in one position of the cover (2) and which are not disposed adjacent the notches (12) in another position of the cover (2), said lengths (16) being outwardly offset and the bottom edges (17) of said lengths being situated at a lower level than the bottoms (13) of the corresponding notches (12), but higher than the horizontal rim (5) of the container (1).

2. A food container according to claim 1, characterized in that the bottom face (14) of the cover (2) is provided with a second rib (15) which is situated parallel to and inside the first rib (9) of the cover (2).

3. A food container according to claim 2, characterized in that the top face of the cover (2) includes a raised portion (10) surounding the cover (2) and including a gap at one point (11), said raised portion (10) being disposed around a rectangle whichis larger than the bottom (3) of the container (1) but intermediate between the size of the first rib (9) and the second rib (15) on the bottom face (14) of the cover (2), thereby enabling covers to be stacked on one another and also enabling containers to be stacked on covers.

**Patentansprüche**

1. Nahrungsmittelbehälter (1) mit einem im wesentlichen rechteckigen Boden (3) und sich nach oben erweiternden Wänden (4), die in einer im wesentlichen rechteckigen Öffnung (7) enden, wobei der Behälter in seinem oberen Bereich einen waagerechten Rand (5) mit rechteckiger äußerer Form, der die Öffnung (7) des Behälters (1) umgibt, und eine senkrechte Kante (6) besitzt, die die Wände (4) über den Rand (5) nach oben verlängert, wobei der Behälter (1) mit einem Deckel (2) versehen ist, der einerseits einen waagerechten Rand (8) und andererseits eine senkrechte Kante (9) aufweist, die oberhalb des Randes (8) liegt und die senkrechte Kante (6) des Behälters (1) umgreift, und wobei die senkrechte Kante (6) des Behälters (1) eine Höhe besitzt, die der (9) des Deckels (2) ähnlich ist, dadurch gekennzeichnet, daß die senkrechte Kante (6) des Behälters (1) Nuten (12) auf mindestens zwei Seiten des Behälters (1) aufweist und daß die senkrechte Kante (9) des Deckels (2) Abschnitte (16) besitzt, die den Nuten (12) in einer Lage des Deckels (2) gegenüberliegen und diesen Nuten (12) in einer anderen Lage des Deckels (2) nicht gegenüberliegen, wobei die Abschnitte (16) nach außen versetzt sind und ihr unterer Rand (17) unterhalb des Niveaus des Grunds (13) der entsprechenden Nut (12), aber oberhalb des waagerechten Rands (5) des Behälters (1) liegt.

2. Nahrungsmittelbehälter nach Anspruch 1, dadurch gekennzeichnet, daß die Unterseite (14) des Deckels (2) eine Rippe (15) aufweist, die parallel zur Kante (9) des Deckels (2) und innerhalb dieser Kante verläuft.

3. Nahrungsmittelbehälter nach Anspruch 2, dadurch gekennzeichnet, daß die Oberseite des Deckels (2) einen Wulst (10) besitzt, der um den Deckel (2) herumläuft und an einem Punkt (11) unterbrochen ist, wobei dieser Wulst (10) entlang eines Rechtecks verläuft, dessen Abmessungen größer als die des Bodens (3) des Behälters (1) sind, aber zwischen denen der Kante (9) und der Rippe (15) liegen, die sich auf der Unterseite (14) des Deckels (2) befinden, so daß es auch möglich wird, Deckel auf Deckel und Behälter auf Deckel zu stapeln.

# FIG. 1

# FIG. 2

# FIG. 3

# FIG. 4

# FIG. 5

# FIG. 6

# FIG. 8

# FIG. 7

## FIG. 9

## FIG. 10

## FIG. 11

# FIG. 12

# FIG. 13